**Europäisches Patentamt**

**European Patent Office**

**Office européen des brevets**

(19)

(11) Veröffentlichungsnummer: **0 069 695**
**B1**

(12) # EUROPÄISCHE PATENTSCHRIFT

(45) Veröffentlichungstag der Patentschrift:
**11.09.85**

(51) Int. Cl.⁴: **H 04 Q 7/04**

(21) Anmeldenummer: **82730081.5**

(22) Anmeldetag: **16.06.82**

(54) **Funkrufsystem.**

(30) Priorität: **04.07.81 DE 3126921**

(43) Veröffentlichungstag der Anmeldung:
**12.01.83 Patentblatt 83/2**

(45) Bekanntmachung des Hinweises auf die Patenterteilung:
**11.09.85 Patentblatt 85/37**

(84) Benannte Vertragsstaaten:
**DE GB IT NL SE**

(56) Entgegenhaltungen:
**GB - A - 2 004 398**
**US - A - 3 836 726**
**US - A - 4 178 475**

**ERICSSON REVIEW, Band 52, Nr. 3/4, 1975, Seiten 136-147, Stockholm, SE. D. AKERSBERG: "ERICALL CONTACTOR - a new generation of wireless paging systems"**
**PATENTS ABSTRACTS OF JAPAN, Band 4, Nr. 126, 5. September 1980, Seite 42E24**

(73) Patentinhaber: **ANT Nachrichtentechnik GmbH, Gerberstrasse 33, D-7150 Backnang (DE)**

(72) Erfinder: **Koch, Harry, Ing. grad., Burgstrasse 263, D-3006 Burgwedel 3 (DE)**

(74) Vertreter: **Schickle, Gerhard, Dipl.-Ing. et al, ANT Nachrichtentechnik GmbH Patent- und Lizenzabteilung Gerberstrasse 33, D-7150 Backnang (DE)**

## Beschreibung

Die Erfindung betrifft ein Verfahren zum Betreiben eines Funkrufsystems und eine Funkrufanlage nach dem Oberbegriff des Patentanspruches 1 bzw. 15. Bei einem solchen Funkrufsystem ist eine Funkrufzentrale über das Fernsprechnetz, beispielsweise auch über Fernwahleinrichtungen, von einer Fernsprechteilnehmerstation durch Wahl einer besonderen Kennzahl erreichbar. Aufgrund einer anschließend vom Fernsprechteilnehmer gewählten Rufnummer des gerufenen Funkteilnehmers wird von der Funkrufzentrale ein Rufsignal an den betreffenden Funkrufempfänger ausgesendet. Dabei kann das Rufsignal auch eine vom rufenden Teilnehmer eingegebene Nachricht (beispielsweise eine fremde Rufnummer) enthalten, die auf einer Anzeigeeinrichtung des Rufempfängers optisch angezeigt wird. Der gerufene Teilnehmer kann durch die Anzeige, beispielsweise der fremden Rufnummer, veranlaßt werden, den zu dieser fremden Rufnummer gehörigen Teilnehmer von einem Fernsprechapparat aus anzurufen.

Handelt es sich bei dem Fernsprechnetz, über welches der Zugriff zu einer oder mehreren Funkrufzentralen erfolgt, um das öffentliche Fernsprechnetz, so ist ein Funkruf landesweit möglich. Der Funkrufempfänger kann von der zu rufenden Person dauernd getragen werden und einen aufgenommenen Funkruf akustisch melden. Ein derartiges Funkrufsystem ist in der Zeitschrift »Technische Mitteilungen AEG-Telefunken«, 1978, Heft 6/7 auf den Seiten 287 bis 290 beschrieben. Es ist geeignet, digitale Nachrichten, also Ziffern, auf dem Display des tragbaren Funkrufempfängers zur Anzeige zu bringen.

Inzwischen hat sich das Bedürfnis ergeben, einem Funkrufteilnehmer zusätzliche Nachrichten zu übermitteln, so daß die Tendenz dahin geht, auch alphanumerische Zeichen auf dem Display zur Anzeige zu bringen. Dies hat aber den Nachteil, daß in den möglichst klein und billig zu haltenden tragbaren Funkrufempfängern nicht nur weitaus kompliziertere Displays, sondern auch entsprechend größere und teurere Speicher benötigt werden. Außerdem bereitet es bedienungstechnisch Schwierigkeiten, alphanumerische Zeichen mit einem Fernsprechapparat einzugeben.

Dementsprechend ist es Aufgabe der Erfindung, auf andere Weise in einem Funkrufsystem, das die Übertragung digitaler Nachrichten (Daten) erlaubt, die Übertragung zusätzlicher Nachrichten zu ermöglichen.

Diese Aufgabe wird gelöst durch das Verfahren mit den Merkmalen des Patentanspruches 1 und durch die Funkrufanlage mit den Merkmalen des Patentanspruches 15. Vorteilhafte Weiterbildungen sind in den Unteransprüchen angegeben.

Der Erfindung liegt die Überlegung zugrunde, daß für die Übermittlung zusätzlicher Nachrichten eine Lösung gefunden werden sollte, für die nach Möglichkeit keine zusätzliche Speicherkapazität in den Funkrufempfängern vorgesehen werden muß. Dies führt zu dem Schluß, daß diese Speicherkapazität entweder woanders, beispielsweise in der Funkrufzentrale vorgesehen werden müßte oder aber ein Weg zu finden wäre, die Speicherung der zusätzlichen Signale überhaupt überflüssig zu machen. Bei alphanumerischen Zeichen erscheint die Speicherung im Funkrufempfänger aber als unabdingbar, und selbst wenn sie sich vermeiden ließe, bleiben noch die bedienungstechnischen Schwierigkeiten bei der Eingabe mit Hilfe eines Fernsprechapparates.

Mit Hilfe der Erfindung werden diese Probleme dadurch umgangen, daß einerseits zur Übermittlung der zusätzlichen Nachrichten die Form der Sprachdurchsage gewählt ist; sie macht eine Speicherung im Funkrufempfänger überflüssig, weil die Sprachinformation vom gerufenen Teilnehmer unverzögert und unmittelbar aufgenommen werden und im Gedächtnis behalten werden kann, was bei einer optischen Nachrichtenübermittlung nicht erwartet werden kann; hier muß erst einmal die Aufmerksamkeit erregt werden und es vergeht einige Zeit, bis der gerufene Teilnehmer die optische Information aufnimmt. Andererseits kann mit Hilfe der Erfindung sogar eine Zwischenspeicherung der Sprachinformation in der Funkrufzentrale dadurch vermieden werden, daß der rufende Teilnehmer seine Sprachinformationen zunächst zurückhält und erst durch ein akustisches Signal von der Funkrufzentrale zum Sprechen aufgefordert wird, wobei der rufende Teilnehmer dieses akustische Signal erst dann erhält, wenn eine unmittelbare Aussendung ohne Zwischenspeicherung möglich ist.

Die Zur-Verfügungstellung von Sprechverbindungen mit Hilfe einer bestimmten Codeziffer, die vom rufenden Teilnehmer zu wählen ist, erfordert bedeutend mehr Belegungszeit eines Funkkanals als die Übertragung lediglich eines Rufsignals, das durch einen Wählvorgang ohne die bestimmte Codeziffer für eine Sprechverbindung veranlaßt ist und lediglich zur Übertragung von digital im Rufempfänger anzuzeigenden Daten dient. Hinzu kommt, daß für die zusätzlichen Sprechverbindungen jeweils untereinander gleiche, feststehende Zeiträume zur Verfügung gestellt werden sollten, damit sich rufende Teilnehmer bei der Durchgabe ihrer Sprachinformationen auf den jeweils zur Verfügung stehenden Zeitraum einstellen können. Das hat zur Folge, daß der für eine Sprechverbindung zur Verfügung gestellte Zeitraum nicht selten länger dauern wird, als der tatsächlich für die durchzugebenden Sprachinformationen benötigte Zeitraum. Zwar hat sich gezeigt, daß bei geeigneter Ablaufsteuerung und bei dem zu erwartenden Verkehrsaufkommen von Rufsignalen mit rein digitalen Nachrichten und solchen mit zusätzlichen Sprachinformationen diese Sprachinformationen durchaus innerhalb zur Verfügung stehender Sendezyklen unterzubringen sind, es bleibt aber trotzdem ein Ziel, mit der innerhalb eines Funkkanals zur Verfügung stehenden Sendezeit ökonomisch umzugehen.

Um dies zu ermöglichen, werden alle Rufsignale in der Funkrufzentrale zwischengespeichert und dann zyklusweise mit einer Zyklusdauer von beispielsweise 60 Sekunden jeweils sequentiell in einem Bündel ausgesandt. Der dazu in der Funkrufzentrale erforderliche Sendespeicher ist so ausgelegt, daß er diejenige Anzahl von Rufsignalen speichern kann, die in einem Sendezyklus maximal ausgesendet werden sollen. Die Rufsignale werden als digitales Datentelegramm nach vorangegangener Codeumsetzung der eingegangenen Wählimpulsgruppen in der Funkrufzentrale gespeichert, wobei die Speicherkapazität auch der Anzahl der maximalen Rufaufträge in den Hauptverkehrsstunden angepaßt ist. In modernen digitalen Funkrufsystem werden etwa 100 ms Belegungszeit für einen Funkruf mit 16stelliger Ziffernübertragung erforderlich. Ein Datenspeicher für 30 Sekunden Sendedauer würde demnach 300 Rufe pro Minute ermöglichen und zusätzlich im Anschluß an die Datenübertragung auch noch eine Sprachdurchsage von 30 Sekunden gestatten, wenn der Sendezyklus insgesamt 60 Sekunden dauert.

Innerhalb eines solchen Sendezyklus wird zunächst eine sog. Präambel von beispielsweise 2 Sekunden Dauer gesendet als Ankündigung nachfolgender Rufsignale. Diese Ankündigung dient u. a. dazu, die mit Rücksicht auf den Stromverbrauch nicht ständig eingeschalteten Funkrufempfänger einzuschalten und auf den Empfang vorzubereiten. In der anschließenden Sendezeit ist eine geordnete Abwicklung des Funkverkehrs nur oder jedenfalls am einfachsten dann möglich, wenn lückenlos ein Datentelegramm (Rufsignal) nach dem anderen folgt. Deswegen würden dazwischen geschaltete Sprachinformationen störend sein. Es müßte nach einer solchen Lücke zwischen den Datentelegrammen auch wiederum eine Präambel folgen, was zu einem Zeitverlust von immerhin beispielsweise 2 Sekunden innerhalb eines Sendezyklus von 60 Sekunden führt.

Zur Vermeidung solcher Zeitverluste ist es daher vorteilhaft, wenn nach der Wahl der Codeziffer für die gewünschte Sprechverbindung die Aussendung des zugehörigen Rufsignals, also des reinen Datentelegramms, verzögert wird, bis innerhalb des betroffenen Sendezyklus alle Vorrang genießenden Rufsignale gesendet sind; dabei ist mit den Vorrang genießenden Rufsignalen bevorzugt an diejenigen gedacht, die nicht mit einem Sprechwunsch und einer entsprechenden Codeziffer gekoppelt sind. Dabei wird das durch die Wahl mit Codeziffer veranlaßte Rufsignal unmittelbar im Anschluß an im selben Sendezyklus gesendete Rufsignale, denen kein Sprechwunsch zugeordnet ist, ohne dazwischenliegende Präambel gesendet und die Bereitstellung der Sprechverbindung erfolgt im selben Sendezyklus im Anschluß an die Aussendung des mit dem Sprechwunsch verbundenen Rufsignals, das durch die Wahl mit Codeziffer veranlaßt ist.

Damit die Sprachsignale unmittelbar ohne Zwischenspeicherung ausgesendet werden können, erhält der rufende Teilnehmer das Ende des akustischen Signals, das ihm signalisiert, daß er nun sprechen kann, erst, wenn innerhalb des Sendezyklus alle Vorrang genießenden Rufsignale gesendet sind. Das akustische Signal kann dabei ein Hörton sein, der dem rufenden Teilnehmer nach der Wahl zugeleitet wird und der vereinbarungsgemäß erst beendet wird, wenn die Durchgabe der Sprachinformation seitens des rufenden Teilnehmers erfolgen kann.

Es kann dem rufenden Teilnehmer aber auch zunächst vor dem akustischen Signal, das ihn zum Sprechen veranlaßt, ein Wartesignal zugeleitet werden, das beispielsweise kurz vor dem Beginn des als Sprechaufforderung gedachten akustischen Signales aufhört.

Wenn eine Wählimpulsgruppe mit der Codeziffer für einen Sprechwunsch bei der Funkrufzentrale eingeht, wird das nach Codeumsetzung entstehende digitale Rufsignal in der Funkrufzentrale zwischengespeichert bis die Rufsignale mit Vorrang, die durch Wählen ohne die Codeziffern zustande gekommen sind, ausgesendet sind.

Probleme können dadurch entstehen, daß die Zeitspanne für einen der jeweils mit einer Präambel beginnenden Sendezyklen nicht immer in optimaler Weise dem Verkehrsaufkommen angepaßt sein kann, da es sich ja im Laufe des Tages ändert. Mit Rücksicht darauf, daß die Präambel einen möglichst kleinen Anteil des Sendezyklus einnehmen sollte, ist es zweckmäßig, einen Sendezyklus von langer Dauer zu wählen, denn je kürzer der Sendezyklus würde, desto größer wäre der prozentuale Anteil der Präambel an der Zeitspanne, welche ein Sendezyklus einnimmt. Aus diesem Grunde ist es zweckmäßig, eine Mindestzeitspanne für einen Sendezyklus vorzugeben. Die darüber hinausgehende Länge des Sendezyklus kann entweder vom Verkehrsaufkommen abhängig gemacht werden oder — was sich einfacher realisieren läßt — konstant gewählt sein. Dann ergibt sich allerdings die Schwierigkeit, daß sich zusätzlich zu rein digitalen Rufsignalen nicht immer in jedem Sendezyklus auch noch eine Sprachdurchsage unterbringen läßt. Soll die Sprache den Datenverkehr nicht beeinträchtigen, erscheint es deshalb sinnvoll, den Belegungsgrad des Sendespeichers mit zu erfassen und, wenn erforderlich, einen Sprachauftrag abzuweisen, wenn der Belegungsgrad beispielsweise mehr als 300 rein digitale Rufsignale (Datentelegramme) je Minute erreicht hat. Der dann rufende Teilnehmer, der einen Sprechwunsch durch eine Codeziffer angemeldet hat, wird dann das Besetztzeichen erhalten, so daß für diesen Teilnehmer bis zu einer erneuten Wahl kein Rufsignal gesendet wird.

Es wäre statt dessen aber auch möglich, die Aussendung eines einer Wahl mit der Codeziffer entsprechenden Rufsignals bis zu einem späteren Sendezyklus zu verzögern, wenn in dem gerade laufenden Sendezyklus vorrangige (z. B. rein digitale) Rufsignale nicht mehr genügend Zeit belassen für den Zeitraum, der für eine anschließende Sprechverbindung noch vorgesehen sein müßte.

Umgekehrt ist es auch möglich, innerhalb eines laufenden Sendezyklus die Übertragung rein digitaler Rufsignale dann abzubrechen, wenn gerade noch Platz für eine anstehende Sprachübertragung verbleibt. Die dann wegen der Unterbrechung der Übertragung der rein digitalen Rufsignale übriggebliebenen rein digitalen, normalerweise mit Vorrang behandelten Rufsignale, also der Überhang, werden dann im nächsten Sendezyklus ausgesendet, und zwar dort bevorzugt vor allen anderen später eingegangenen Rufsignalen.

Gegen Ende eines für eine Sprechverbindung vorgesehenen Zeitraumes wird von der Funkrufzentrale an den rufenden Teilnehmer bevorzugt eine akustische Warnung gegeben, beispielsweise ein Tickerzeichen, damit der rufende Teilnehmer seine Sprachdurchsage noch rechtzeitig zum Abschluß bringen kann.

Viele der geschilderten Maßnahmen machen den Betriebsablauf reibungsloser und z. T. auch schneller oder nutzen die Funkkanäle besser aus, wie z. B. die Übernahme des Überlaufes in einen späteren Sendezyklus, weil dann noch eine komplette Sprachdurchsage in dem vorhergehenden Sendezyklus möglich ist, wo sonst vielleicht nur wenige, den Überlauf bildende digitale Rufsignale im zweiten Teil des Sendezyklus übertragen worden wären und die restliche Zeit des Sendezyklus ungenutzt geblieben wäre.

Gehen in einem Zeitraum, der von der Funkrufzentrale einem bestimmten Sendezyklus zugeordnet wird, mehr als 2 Wählimpulsgruppen ein, die die Codeziffer für einen Sprachwunsch enthalten, so erhält zweckmäßigerweise der rufende Teilnehmer der später eingehenden Wählimpulsgruppe das Besetztzeichen, weil sich innerhalb eines Sendezyklus mit nur einer Präambel lediglich eine Sprachdurchsage unterbringen läßt. Eine Ausnahme kann bei Wahl eines Rufsignals mit Sprechwunsch dann gemacht werden, wenn in der entsprechenden Wählimpulsgruppe gleichzeitig ein Gruppenrufcode erhalten ist, beispielsweise für einen Feueralarm. Dann kann durch einen entsprechenden Decoder in der Funkrufzentrale dafür gesorgt werden, daß ein solches mit einem Gruppenrufcode verbundenes Rufsignal Vorrang genießt vor einem vorher eingegangenen Rufsignal mit Sprachwunsch, jedoch ohne Gruppenrufcode.

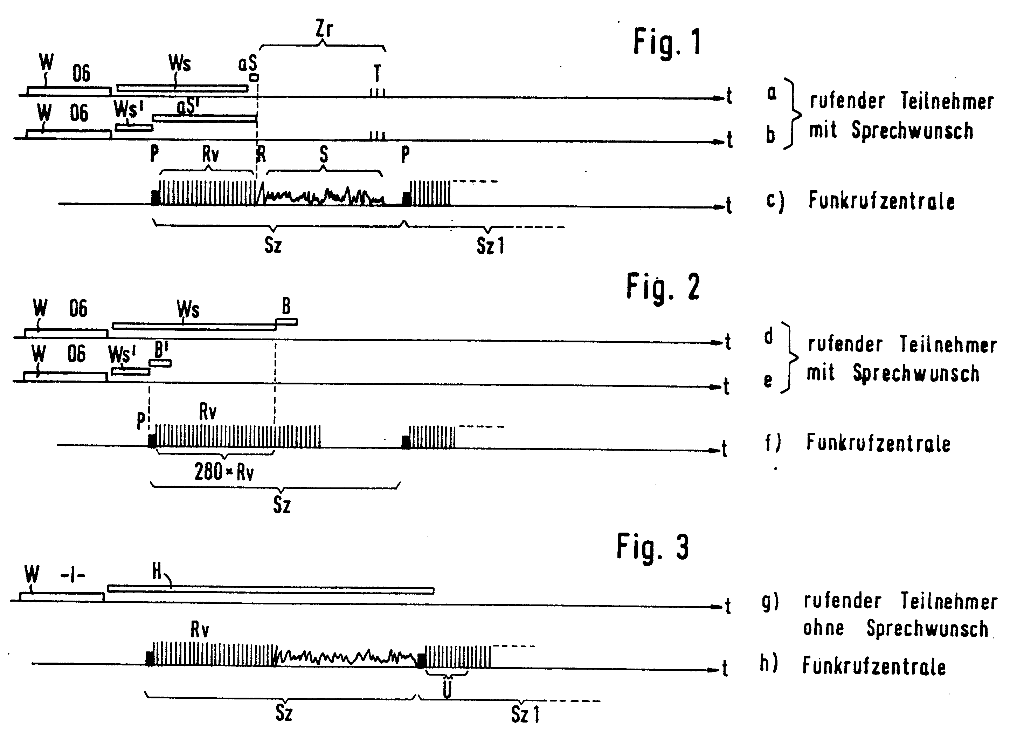

Anhand der Fig. 1 bis 3 werden mögliche Verfahrensabläufe und

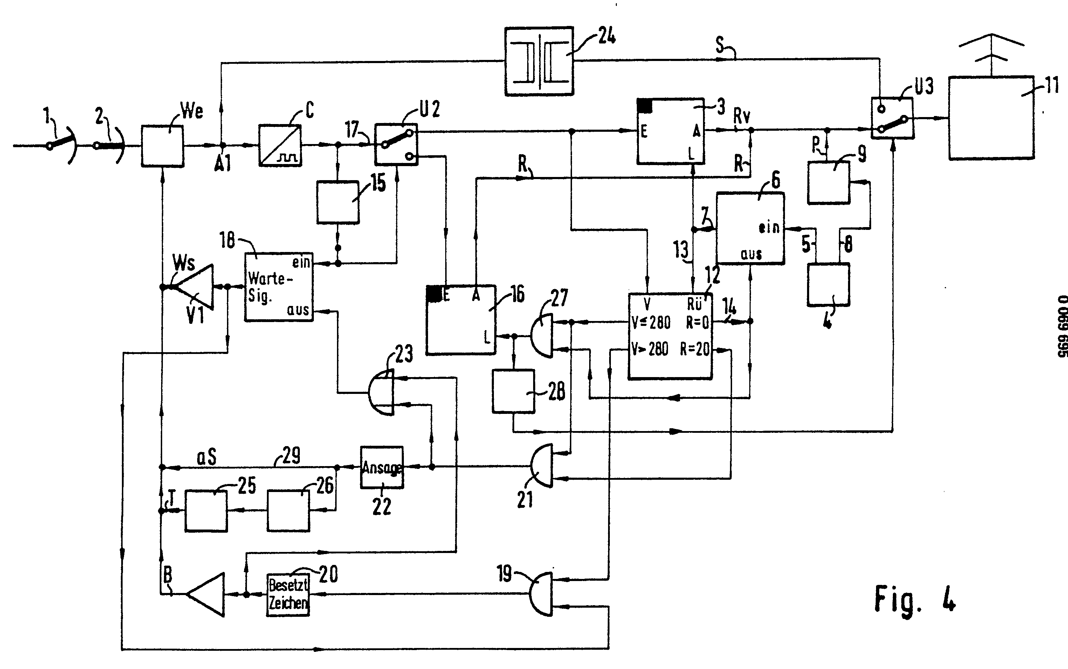

anhand der Fig. 4 ein Blockschaltbild für eine Funkrufanlage nach der Erfindung beschrieben.

In den Fig. 1 bis 3 ist jeweils für einen rufenden Teilnehmer und die Funkrufzentrale der Verfahrensablauf über der Zeit t aufgetragen. Ein Zentimeter entspricht dabei 10 Sekunden. In Fig. 1a versinnbildlicht der Block W den Wählvorgang mit der Codeziffer »06« für den Sprechwunsch. Der rufende Teilnehmer erhält anschließend ein Wartesignal Ws, an welches sich wiederum ein akustisches Signal aS anschließt, beispielsweise die Durchsage »Bitte sprechen«. Der rufende Teilnehmer hat dann Gelegenheit, dem gerufenen Funkrufteilnehmer seine Sprachinformationen durchzugeben. Kurz vor dem Ende des dafür vorgesehenen Zeitraumes Zr werden dem rufenden Teilnehmer von der Funkrufzentrale drei Tickerzeichen T als akustische Warnung übermittelt.

In der Fig. 1c ist zeitgerecht zugeordnet das Geschehen in der Funkrufzentrale. Der Sendezyklus Sz, in welchen das digitale Rufsignal R mit nachfolgender Sprachdurchsage entsprechend dem Wählvorgang W und dem Zeitraum Zr eingeordnet werden, beginnt mit einer Präambel P von 2 Sekunden Dauer, auf welche zunächst die vorrangigen Rufsignale Rv folgen, die auf Wählvorgängen anderer rufender Teilnehmer ohne die Codeziffer 06 beruhen. An die Aussendung dieser vorrangigen Rufsignale Rv schließt sich unmittelbar das dem Wählvorgang W entsprechende Rufsignal R an, ohne daß eine einen Zeitverlust bedeutende Präambel zwischengeschaltet ist. Die nächste Präambel folgt vielmehr erst zu Beginn des späteren Sendezyklus Sz1.

In der Fig. 1b ist für den rufenden Teilnehmer mit Sprechwunsch ein modifizierter Verfahrensablauf dargestellt, bei welchem das Wartesignal Ws′ schon zu Beginn der Präambel P von dem akustischen Signal aS′ abgelöst wird. Dabei endet aber auch hier das akustische Signal aS′ erst dann, wenn alle vorrangigen Rufsignale Rv ausgesendet sind, damit der rufende Teilnehmer nicht schon vorher seine Sprachdurchsage macht. Eigentlich dürfte das akustische Signal erst mit dem Ende der Aussendung des Rufsignales R enden; da dieses aber nur eine Zeit von 0,1 Sekunden in Anspruch nimmt und es ohnehin einige zehntel Sekunden dauert, bis nach dem Ende des akustischen Signals der rufende Teilnehmer seine Sprachdurchsage beginnt, schadet es nichts, wenn das akustische Signal schon kurz vor dem für die Sprachdurchsage vorgesehenen Zeitraum Zr endet.

Die Umschaltung vom Warnsignal auf das akustische Signal kann frühestens zu demjenigen Zeitpunkt erfolgen, an welchem in der Funkzentrale die Entscheidung gefallen ist, die Sprachdurchsage im Sendezyklus Sz noch zuzulassen. Ist die Zeitspanne Sz fest vorgegeben und genießen die vorrangigen Rufsignale Rv absoluten Vorrang vor einer Sprachdurchsage, so kann der in Fig. 2 dargestellte Fall eintreten.

Hier sind vor der Präambel P soviele vorrangige Rufsignale Rv, nämlich über 280 Rufsignale angefallen, daß hierfür mehr als die Hälfte des Sendezyklus Sz beansprucht wird und damit nicht mehr genügend Zeit bleiben würde für den fest vorgegebenen Zeitraum Zr (Fig. 1) für eine Sprachdurchsage S. Der rufende Teilnehmer erhält daher gemäß Fig. 2d nach dem Wählvorgang W mit der Codeziffer 06 für den Sprechwunsch zwar zunächst ein Wartesignal Ws, jedoch fällt nach dem Ablauf des halben Sendezyklus in der Funkzentrale die Entscheidung, daß die Sprachdurchsage nicht mehr erfolgen kann wegen überwiegender Beanspruchung des Sendezyklus durch vorrangige Rufsignale Rv. Dementsprechend wird das Wartesignal abgelöst von einem Besetztzeichen B für den rufenden Teilnehmer.

Fig. 2e geht von ähnlichen Verhältnissen aus, mit dem Unterschied, daß aufgrund eines anderen internen Aufbaues der Funkrufzentrale hier schon bei Beginn der Präambel P festgestellt wird, daß die Anzahl der im Sendespeicher gespeicherten vorrangigen Rufsignale Rv die Zahl 280 überschritten hat und dementsprechend dem rufenden Teilnehmer ein Besetztzeichen B' übermittelt werden muß.

Einen anderen Verfahrensablauf zeigt Fig. 3. Hier ist von der Überlegung ausgegangen worden, daß in dem Sendezyklus Sz nach Fig. 2f aufgrund des absoluten Vorranges der vorrangigen Rufsignale Rv 20 Sekunden am Ende des Sendezyklus ungenutzt bleiben. Dies kann nach Fig. 3h dadurch vermieden werden, daß bei mehr als 280 vorrangigen Rufsignalen deren Übertragung nach dem 280igsten vorrangigen Rufsignal abgebrochen wird zugunsten einer Sprachdurchsage, während die restlichen vorrangigen Rufsignale (Überhang Ü) auf den späteren Sendezyklus Sz1 verschoben werden. Damit ist gerade dann, wenn ein hohes Verkehrsaufkommen an vorrangigen Rufsignalen Rv vorliegt, nach Fig. 3h auch dafür gesorgt, daß der Sendezyklus Sz auch voll ausgenutzt wird.

In Fig. 3g ist gezeigt, wie in einem solchen Fall ein rufender Teilnehmer ohne Sprechwunsch, d. h. ohne die Codeziffer 06, behandelt wird: er erhält ein Hörzeichen H, das solange dauert, bis sein Rufzeichen innerhalb der mit Ü bezeichneten Zeitspanne tatsächlich gesendet worden ist. Erst dann kann dieser Teilnehmer auflegen, d. h. er muß gegenüber dem Beispiel nach Fig. 2f ungefähr 30 Sekunden länger warten.

Zum besseren Verständnis des in Fig. 4 gezeigten Blockschaltbildes für eine Funkrufanlage nach der Erfindung werden im folgenden die abzuwickelnden Verfahrensschritte aufgezählt, wie sie sich ansich schon anhand der Beschreibung der Fig. 1 und 3 ergeben haben:

1. Wählvorgang des rufenden Teilnehmers ohne oder mit der Codeziffer (06) für einen Sprechwunsch;
2. Zwischenspeicherung des nach Codeumsetzung in der Funkrufzentrale entstandenen Rufsignals bei gleichzeitiger Übermittlung eines Wartesignals (vgl. Fig. 1 und 2) bzw. eines Hörtones (Fig. 3) an den rufenden Teilnehmer,
3. Entscheidung bei Vorliegen eines Sprechwunsches, ob wegen anderer vorrangiger Rufsignale hierfür im nächsten Sendezyklus noch Zeit verbleibt;
wenn nein: Besetztzeichen oder weitere Zwischenspeicherung bis zu einem späteren Sendezyklus;
wenn ja:
4. Anhängen des Zwischengespeicherten, also des dem Display des Funkrufempfängers anzuzeigenden Digitaltelegrammes, mit Sprachempfangsauftrag, an das letzte vorrangige Datentelegramm (Rufsignal), das in diesem Sendezyklus ausgesendet wird, wobei dieses Anhängen unabhängig vom Füllgrad des Sendespeichers erfolgen kann, wenn die für einen Sendezyklus vorgesehene Zeitspanne vom System her variabel sein darf;
5. Aufforderung »Bitte sprechen« an den mit Sprechwunsch rufenden Teilnehmer, wobei diese Aufforderung letztlich nach dem Ende aller vorrangigen Datentelegramme (Rufsignale) ergeht;
6. Sprechzeitende-Ankündigung (Tickerzeichen);
7. Senderabschaltung in der Funkrufzentrale bis zur nächsten Präambel.

In der Fig. 4 sind nun die Mittel zur Verwirklichung der meisten dieser Verfahrensschritte dargestellt, dabei sind die Verfahrensabläufe nach den Fig. 1a, 1c und 2f zugrunde gelegt.

Geht über das Fernsprechnetz mit Wählern 1 und 2 bei der gezeigten Funkrufzentrale eine Wählimpulsgruppe entsprechend einem Ruf ohne Sprechwunsch, also ohne die Codeziffer 06 ein, so gelangen die Impulse über eine Weiche We zu einem Codeumsetzer C zur Umsetzung vom Dezimalcode des Fernsprechnetzes in einen Binärcode. Von hier gelangen die nun entstandenen Rufsignale, die mangels Sprechwunsch vorrangig behandelt werden, über einen Umschalter U2 in der gezeigten Schaltstellung zu einem Sendespeicher 3 mit einer Speicherkapazität von 580 Rufsignalen entsprechend einer Zeitspanne von 60 Sekunden abzüglich 2 Sekunden für die Präambel innerhalb eines Sendezyklus (unter der Voraussetzung, daß ein Rufsignal eine Dauer von 0,1 Sekunden hat). Der Sendespeicher 3 wird alle 60 Sekunden ausgelesen. Dafür sorgt eine Ablaufsteuerung 4, die über eine Leitung 5 einen Taktgenerator 6 einschaltet, der über eine Leitung 7 Taktsignale an einen Eingang L des Sendespeichers 3 abgibt zur Steuerung der Auslesung des Speichers über einen Ausgang A. Ebenfalls von der Ablaufsteuerung 4 wird über eine Leitung 8 ein Präambelgenerator 9 gesteuert, der auf die vom Ausgang A kommende Leitung am Anfang jedes Sendezyklus eine Präambel gibt, auf welche die aus dem Speicher 3 ausgelesenen Rufsignale folgen, die in der gezeigten Schaltstellung über einen Umschalter U3 zu einem Sender 11 gelangen und drahtlos ausgesendet werden zu Funkrufempfängern.

Vor dem Speicher 3 ist ein Vor/Rückwärtszähler 12 mit einem die Vorwärtszählung veranlassenden Eingang angeschlossen. Er zählt von Null ausgehend die für einen Sendezyklus vorgesehenen und in den Sendespeicher einlaufenden Rufsignale. Für den nächsten Sendezyklus wird auf einen anderen, nicht dargestellten Zähler übergegangen, denn der gezeigte Zähler 12 wird beim Auslesen des Sendespeichers 3 zum Rückwärtszählen benötigt, gesteuert über eine vom Taktgenerator 6 kommende Leitung 13. Hat der Zähler 12 wieder auf Null zurückgezählt, so wird über eine Leitung 14 der Taktgenerator 6 ausgeschaltet und es kann dabei auch der Sender 11 bis zum Ende des Sendezyklus ausgeschaltet werden, wenn nicht noch andere Signale zu verarbeiten sind.

Der rufende Teilnehmer kann bei dem geschilderten Verfahrensablauf durch einen von der Funkrufzentrale eingespeisten Hörton aufgefordert werden, solange noch nicht aufzulegen, bis sein Rufsignal von Sender 11 gesendet ist; auf diese Weise kann sichergestellt werden, daß dem rufenden Teilnehmer noch bevor er auflegt die nötigen Gebührenimpulse übermittelt werden. Hierauf braucht aber im vorliegenden Zusammenhang nicht näher eingegangen zu werden.

Geht nun eine Wählimpulsgruppe mit der Codeziffer 06 für einen Sprechwunsch ein, so gelangt das entsprechende Rufsignal auch zu einem Decoder 15 für diese Codeziffer, der dem Codeumsetzer C nachgeschaltet ist. Der Decoder 15 beeinflußt Steuermittel. Diese dienen

a) zur Verzögerung der Aussendung des zugehörigen Rufsignales (R); hierzu dient ein Speicher 16, ein Zähler 12 zum Vorwärts- und Rückwärtszählen und ein Undgatter 27 zur Steuerung des Auslesens des Speichers 16;

b) zum Erfassen des Auftretens des letzten derjenigen Rufsignale Rv, die innerhalb eines Sendezyklus Sz der Präambel folgen und die aufgrund von Wählvorgängen ohne Codeziffer 06 ausgesendet werden; hierzu dient ein Zählerausgang R = 0 zum Erfassen des Rückwärtszählergebnisses 0 und Weiterleitung über eine Leitung 14 an das Undgatter 27,

c) zum durch dieses Erfassen (R = 0) ausgelösten unmittelbaren Anfügen des zur Codeziffer 06 gehörenden Rufsignals R und dessen Aussenden im Anschluß an das genannte letzte Rufsignal Rv; hierzu dient der Ausgang A des Speichers 16,

d) zum anschließenden Umschalten (mit Hilfe eines Umschalters U3) des zum Sender 11 kommenden Nachrichtenweges für Rufsignale auf einen vom rufenden Teilnehmer kommenden und für eine Sprechverbindung in Richtung zu einem Funkrufempfänger geeigneten Nachrichtenweg 24; zur Steuerung des Umschalters U3 ist eine Leitung vorgesehen, die vom Undgatter 27 über ein Verzögerungsglied 28 führt.

Im einzelnen ist die Funktionsweise folgende: Der Ausgang des Decoders 15 steuert den Umschalter U2 vorübergehend in die andere Schaltstellung, damit das mit dem Sprechwunsch verknüpfte Rufsignal in einem gesonderten Speicher 16 gespeichert wird oder zumindest die Speicherplatzadresse festgehalten wird. Damit die für die Dauer eines Rufsignals (100 ms) erfolgende Umschaltung des Umschalters U2 rechtzeitig beginnen kann, muß im Leitungsabschnitt 17 zwischen dem Codeumsetzer C und dem Umschalter U2 unter Umständen ein geeignetes Verzögerungsglied vorgesehen sein. Der Decoderausgang steuert außerdem die Einschaltung eines Wartesignalgenerators 18, von dessen Ausgang eine Leitung zurück zum rufenden Teilnehmer führt (über einen Trennverstärker V1).

Weitere eingehende Wählimpulsgruppen ohne Codeziffer gelangen über den Umschalter U2 in der gezeigten Stellung zum Sendespeicher 3 und werden, wie oben geschildert, verarbeitet. Gelangt dabei der Zähler 12 beim Vorwärtszählen auf ein Zählergebnis über 280 entsprechend Fig. 2f, so wird dies an einem Zählerausgang V ≥ 280 für den restlichen Sendezyklus bleibend gemeldet und die Meldung gelangt zu einem Eingang eines Undgatters 19, an dessen anderem Eingang schon das Ausgangssignal des Wartesignalgenerators 18 liegt. Infolgedessen veranlaßt das Ausgangssignal des Undgatters 19 einen Besetztzeichen-Generator 20, dem rufenden Teilnehmer mit Sprechwunsch ein Besetztzeichen zu übermitteln. Dies ist möglich, weil der Decoder 15 nach der Decodierung des Sprechwunsches entsprechend der Codeziffer 06 dafür gesorgt hat, daß die Verbindung zum rufenden Teilnehmer zunächst aufrechterhalten bleibt.

Ist der Zähler 12 bis zum Beginn der Rückwärtszählung nur bis zu einem Zählergebnis von bis zu 280 gelangt, so wird dies über einen Zählerausgang V ≤ 280 für den restlichen Sendezyklus bleibend an einen Eingang eines Undgatters 37 und an ein Undgatter 21 gemeldet. Bei Erreichen des Rückwärtszählergebnisses 20 gelangt von einem Zählerausgang R = 20 ein Signal zum Undgatter 21. Dadurch wird von einem Ansagegenerator 22 ein akustisches Signal aS an den rufenden Teilnehmer gegeben, beispielsweise die Durchsage »Bitte sprechen« (Leitung 29). Außerdem wird über ein Odergatter 23 der Wartesignalgenerator 18 abgeschaltet.

Wenn der Zähler 12 auf das Zählergebnis Null zurückgezählt hat und damit die vorrangigen Rufsignale Rv aus dem Sendespeicher 3 in den Sender 11 gelangt sind, gelangt ein Signal zu dem zweiten Eingang des Undgatters 27, dessen anderer Eingang von dem für den Rest des Sendezyklus erhalten bleibenden Signal am Zählerausgang V ≤ 280 gesteuert wird. Der Ausgang des Undgatters 27 steuert das Auslesen des Speichers 16, so daß das darin gespeicherte Rufsignal R mit dem Sprechwunsch noch vor der Umschaltung des Umschalters U3 zum Sender 11 gelangt. Zwischen dem Undgatter 27 und dem davon gesteuerten Schalter U3 liegt ein Verzögerungsglied 28 mit einer Verzögerungszeit von 100 ms entsprechend der Dauer eines Rufsignals. Nach Ablauf dieser Verzögerungszeit wird der Schalter U3 umgeschaltet, damit die Sprechdurchsage vom rufenden Teilnehmer über den Abzweig A1 und einen Übertrager 24 zum Sender 11 gelangen kann.

Kurz vor dem Ende des dafür vorgesehenen Zeitraumes Zr (Fig. 1a) erzeugt ein Warnsignalgenerator 25 ein Tickersignal T (Fig. 1a) für den rufenden Teilnehmer. Dieser Warnsignalgenerator 25 ist von dem Ansagegenerator 22 über eine Ablaufsteuerung 26 so gesteuert, daß das Warnsignal rechtzeitig vor dem Ende der Sprechzeit abgegeben wird.

## Patentansprüche

1. Verfahren zum Betreiben eines Funkrufsystems, bei welchem über das Fernsprechnetz von einer Fernsprechteilnehmerstation durch Wahl einer besonderen Kennzahl eine Funkrufzentrale (Fig. 4) erreichbar ist, welche aufgrund der anschließend vom Fernsprechteilnehmer gewählten Rufnummer des gerufenen Funkrufteilnehmers ein Rufsignal (R, Rv) an den betreffenden Funkrufempfänger aussendet, wobei das Rufsignal (R, Rv) auch eine vom rufenden Teilnehmer eingegebene Nachricht (beispielsweise eine Rufnummer) enthalten kann, die auf einer Anzeigeeinrichtung des Funkrufempfängers optisch angezeigt wird, wobei durch kombinierte Wahl der Kennziffer für ein Rufsignal (R, Rv) und einer bestimmten Codeziffer (06) der rufende Teilnehmer ein akustisches Signal (aS) erhält zur Signalisierung, daß im Anschluß eine Sprechverbindung zum gerufenen Funkrufempfänger bereitgestellt wird, während welcher eine Übermittlung von Sprachinformationen (S) zum Funkrufempfänger möglich ist, dadurch gekennzeichnet, daß das Rufsignal (R, Rv) innerhalb eines Sendezyklus (Sz) ausgesendet wird, der mit einer Präambel (P) beginnt, der mehrere Rufsignale (R, Rv) folgen können, daß nach der Wahl der Codeziffer (06) die Aussendung des zugehörigen Rufsignals (R) verzögert wird, bis innerhalb eines Sendezyklus alle Vorrang genießenden Rufsignale (Rv) gesendet sind, daß das durch die Wahl mit Codeziffer (06) veranlaßte Rufsignal (R) unmittelbar im Anschluß an im selben Sendezyklus (Sz) gesendete Rufsignale (R) ohne dazwischenliegende Präambel gesendet wird und daß die Bereitstellung der Sprechverbindung im selben Sendezyklus (Sz) im Anschluß an die Aussendung des Rufsignals (R) erfolgt, das durch die Wahl mit Codeziffer (06) veranlaßt ist.

2. Verfahren nach Anspruch 1, dadurch gekennzeichnet, daß der rufende Teilnehmer das Ende des akustischen Signals (aS) erst erhält, wenn innerhalb des Sendezyklus (Sz) alle Vorrang genießenden Rufsignale (Rv) gesendet sind.

3. Verfahren nach einem der vorangehenden Ansprüche, dadurch gekennzeichnet, daß der rufende Teilnehmer vor dem akustischen Signal (aS) ein Wartesignal (Ws) erhält.

4. Verfahren nach einem der Ansprüche 1 bis 3, dadurch gekennzeichnet, daß die Verzögerung der Aussendung des durch Wahl mit der Codeziffer (06) veranlaßten Rufsignals (R) durch Zwischenspeicherung (16) in der Funkrufzentrale erfolgt.

5. Verfahren nach einem der vorangehenden Ansprüche, dadurch gekennzeichnet, daß durch Wählen ohne die Codeziffer (06) veranlaßte Rufsignale (Rv) Vorrang genießen.

6. Verfahren nach einem der Ansprüche 1 bis 5, dadurch gekennzeichnet, daß der Sendezyklus (Sz), d. h. die Zeitspanne von Präambel (P) zu Präambel (P), eine vorgegebene Mindestzeitspanne nicht unterschreitet.

7. Verfahren nach Anspruch 6, dadurch gekennzeichnet, daß die jeweils für einen Sendezyklus (Sz) vorgesehenen Zeitspannen von fester Dauer sind.

8. Verfahren nach einem der vorangehenden Ansprüche, dadurch gekennzeichnet, daß die jeweils für eine Sprechverbindung vorgesehenen Zeiträume (Zr) von untereinander gleicher Dauer sind.

9. Verfahren nach einem der vorangehenden Ansprüche, dadurch gekennzeichnet, daß der rufende Teilnehmer vor Ablauf des für eine Sprechverbindung vorgesehenen Zeitraumes (Zr) eine akustische Warnung (T) erhält.

10. Verfahren nach Anspruch 7 und 8, dadurch gekennzeichnet,
daß der durch wahl mit der Codeziffer (06) rufende Teilnehmer ein Besetztzeichen (B) erhält, wenn die für den nächsten Sendezyklus (Sz) vorgesehenen vorrangigen Rufsignale (Rv) nicht mehr genügend Zeit belassen für den Zeitraum (Zr), der für eine Sprechverbindung vorgesehen ist, und
daß bis zu einer erneuten Wahl (W) kein Rufsignal für diesen rufenden Teilnehmer gesendet wird.

11. Verfahren nach Anspruch 7 und 8, dadurch gekennzeichnet, daß die Aussendung eines einer Wahl mit der Codeziffer (06) entsprechenden Rufsignals (R) bis zu einem späteren Sendezyklus (Sz1) verzögert wird, wenn die für den nächsten Sendezyklus (Sz) vorgesehenen vorrangigen Rufsignale (Rv) nicht mehr genügend Zeit belassen für den Zeitraum (Zr), der für eine Sprechverbindung vorgesehen ist.

12. Verfahren nach Anspruch 7 und 8, dadurch gekennzeichnet,
daß bei gleichzeitigem Eingehen von Wählimpulsgruppen (W) in der Funkrufzentrale, die vorrangigen Rufsignalen (Rv) und einer Wahl mit der Codeziffer (06) entsprechen, im nächsten Sendezyklus (Sz) nur soviele vorrangige Rufsignale (Rv) ausgesendet werden, daß noch Zeit bleibt für die unmittelbar anschließende Aussendung des der Wahl mit der Codeziffer entsprechenden Rufsignals (R) mit anschließender Sprechverbindung, und
daß die restlichen vorrangigen Rufsignale (Überhang) (Ü) in einem späteren Sendezyklus (Sz1) ausgesendet werden.

13. Verfahren nach einem der Ansprüche 1 bis 12, dadurch gekennzeichnet, daß beim Eingehen von zwei jeweils die Codeziffer (06) enthaltenden Wählimpulsgruppen (W) innerhalb einer Zeitdauer, die einem Sendezyklus (Sz) zugeordnet ist, der der später eingehenden Wählimpulsgruppe zugeordnete rufende Teilnehmer ein Besetztzeichen erhält.

14. Verfahren nach einem der Ansprüche 1 bis 12, dadurch gekennzeichnet, daß beim Eingeben von zwei jeweils der Codeziffer (06) enthaltenden Wählimpulsgruppen innerhalb einer Zeitdauer, die einem Sendezyklus (Sz) zugeordnet ist, dasjenige einer dieser Wählimpulsgruppen entsprechende Rufsignal Vorrang genießt, welches durch die zusätzliche Wahl eines Gruppenrufcodes mitverursacht ist.

15. Funkrufanlage mit einer über ein Fernsprechnetz erreichbaren Funkrufzentrale, in der ein Codeumsetzer (C) zum Erzeugen von Rufsignalen (R, Rv) und ein Sendespeicher (3) zum vorübergehenden Speichern der sequentiell in Sendezyklen (Sz, Sz1) auszusendenden Rufsignale (R, Rv) vorgesehen ist, sowie mit einem Sender (11) für die Rufsignale und für eine von einem Präambelgenerator (9) erzeugte und jeweils an den Anfang eines Sendezyklus zu stellende Präambel (P), gekennzeichnet durch Mittel zur Erzeugung (22) und verzögerbaren (12, R = 20) Übermittlung (Leitung 29) eines akustischen Signals (aS) an einen rufenden Teilnehmer, wenn dieser durch eine ein Rufsignal veranlassende Wahl in Verbindung mit einer bestimmten Codeziffer (06) einen Sprechwunsch zu erkennen gegeben hat.

16. Funkanlage nach Anspruch 15, dadurch gekennzeichnet, daß in der Funkrufzentrale (Fig. 4) ein Decoder (15) vorgesehen ist für die Codeziffer (06) der jeweils in einem Senderzyklus (Sz) Steuermittel beeinflußt

— zur Verzögerung (16, 27, 12) der Aussendung des zugehörigen Rufsignals (R),
— zum Erfassen (R = 0) des Auftretens des letzten derjenigen Rufsignale (Rv), die innerhalb eines Sendezyklus (Sz) der Präambel folgen und die aufgrund von Wählvorgängen ohne Codeziffer (06) ausgesendet werden,
— zum durch dieses Erfassen (R = 0) ausgelösten unmittelbaren Anfügen (Rü) des zur Codeziffer (06) gehörenden Rufsignals (R) und dessen Aussenden im Anschluß an das genannte letzte Rufsignal (Rv),
— zum anschließenden Umschalten (U3) des zum Sender (11) kommenden Nachrichtenweges für Rufsignale auf einen vom rufenden Teilnehmer kommenden und für eine Sprechverbindung in Richtung zu einem Funkrufempfänger geeigneten Nachrichtenweg (24).

**Claims**

1. Method for the operation of a radio paging system, in which a radio paging exchange (fig. 4) is reachable from a telephone subscriber station by way of the telephone network through selection of a special identification number and emits a paging signal (R, Rv) to the radio paging receiver concerned by reason of the call number of the called radio paging subscriber subsequently selected by the telephone subscriber, wherein the paging signal (R, Rv) can also contain a communication (for example a call number), which is put in by the calling subscriber and indicated optically on an indicating equipment of the paging call receiver, wherein the calling subscriber through combined selection of the identification number for a paging signal (R, Rv) and a certain code numeral (06) receives a signal (aS) to signal that a speech connection to the called radio paging receiver is subsequently placed ready, for the duration of which connection a transmission of speech information (S) is possible to the radio paging receiver, characterised thereby, that the paging signal (R, Rv) is emitted within a transmission cycle (Sz), which starts with a preamble (P), which can be followed by several paging signals (R, Rv), that the emission of the associated paging signal (R) is delayed after the selection of the code numeral (06) until all paging signals (Rv) enjoying precedence have been emitted within a transmission cycle (Sz), that the paging signal (R) caused through the selection with code numeral (06) is emitted immediately following on paging signals (R) emitted in the same transmission cycle (Sz) and without preamble lying therebetween and that the placing ready of the speech connection takes place in the same transmission cycle (Sz) following the emission of the paging signal (R), which is caused through the selection with code numeral (06).

2. Method according to claim 1, characterised thereby, that the calling subscriber receives the end of the acoustic signal (aS) only when all paging signals (Rv) enjoying precedence have been emitted within the transmission cycle (Sz).

3. Method according to one of the preceding claims, characterised thereby, that the calling subscriber receives a waiting signal (Ws) before the acoustic signal (aS).

4. Method according to one of the claims 1 to 3, characterised thereby, that the delay in the emission of the paging signal (R), which is caused through the selection with code numeral (06), takes place through intermediate storage (16) in the radio paging exchange.

5. Methode according to one of the preceding claims, characterised thereby, that paging signals (Rv), which have caused through selection without the code numeral (06), enjoy precendence.

6. Method according to one of the claims 1 to 5, characterised thereby, that the transmission cycle (Sz), i. e. the time span from preamble (P) to preamble (P), does not fall below a predetermined minimum time span.

7. Method according to claim 6, characterised thereby, that the time spans respectively provided for a transmission cycle (Sz) are of fixed duration.

8. Method according to one of the preceding claims, characterised thereby, that the time intervals (Zr) respectively provided for a speech connection are of a duration each equal to the other.

9. Method according to one of the preceding claims, characterised thereby, that the calling subscriber receives an acoustic warning (T) before run-down of the time interval (Zr) provided for a speech connection.

10. Method according to claim 7 and 8, characterised thereby, that the subscriber calling through selection with the code numeral (06) receives an engaged signal (B) when the paging signales (Rv) with precedence, which are provided for the next transmission cycle (Sz), no longer leave suffcent time for the time interval (Zr) provided for a speech connection and that no paging signal is emitted for this calling subscriber until a renewed selection (W) is made.

11. Methode according to claim 7 and 8, characterised thereby, that the emission of a paging signal (R), which corresponds to a selection with the code numeral (06), is delayed to a later transmission cycle (Sz1) when the paging signals (Rv) with precedence, which are provided for the next transmission cycle (Sz), no longer leave sufficient time for the time interval (Zr) provided for a speech connection.

12. Method according to claim 7 and 8, characterised thereby, that on the simultaneous arrival of dialling pulse groups (W) in the paging call exchange, which correspond to paging signals (Rv) with precedence and a selection with code numeral (06), only so many paging signals (Rv) with precedence are emitted in the next transmission cycle (Sz) that time still remains for the immediately following emission of the paging signal (R), which corresponds to the selection with the code numeral, with subsequent speech connection and that the remaining paging signals (overhang) (Ü) with precedence are emitted in a later transmission cycle (Sz1).

13. Method according to one of the claims 1 to 12, characterised thereby, that on the arrival of two dialling pulse groups (W) each containing the code numeral (06) within a time duration which is allocated to a transmission cycle (Sz), the calling subscriber associated with the dialling pulse group arriving later receives an engaged signal.

14. Method according to one of the claims 1 to 12, characterised thereby, that on the arrival of two dialling pulse groups each containing the code numeral (06) within a time duration which is allocated to a transmission cycle (Sz), that paging signal corresponding to one of these dialling pulse groups enjoys precedence, which was caused through the additional selection of a group paging code.

15. Radio paging installation with a paging call exchange, which is reachable by way of a telephone network and in which a code converter (C) for the generation of paging signals (R, Rv) and a transmitter store (3) for the temporary storage of the paging signals (R, Rv) to be emitted sequentially in transmission cycles (Sz, Sz1) are provided, as well as with a transmitter (11) for the paging signals and for a preamble (P) to be generated by a preamble generator (9) and to be placed each time at the beginning of a transmission cycle, characterised by means for the generation (22) and delayable (12, R = 20) transmission (line 29) of an acoustic signal (aS) to a calling subscriber when this one has made a desire for speech recognisable through a selection, which causes a paging signal, in conjunction with a certain code numeral (06).

16. Radio paging installation according to claim 15, characterised thereby, that a decoder (15) for the code numeral (06) is provided in the radio paging exchange (fig. 4) and in each one transmitter cycle (Sz) influences control means

— for delay (16, 27, 12) in the emission of the associated paging signal (R),
— for the detection (R = 0) of the occurence of the last of those paging signals (Rc), which within one transmission cycle (Sz) follow the preamble and are emitted by reason of selection processes without code numeral (06),
— for the direct appending (Rü), initiated through this detection (R = 0), of the paging signal (R) belonging to the code numeral (06) and its emission following the named last paging signal (Rv) and
— for the subsequent switch-over (U3) of the communications path, leading to the transmitter (1), for paging signals to a communications path (24) coming from the calling subscriber and being suitable for a speech connection in direction towards a paging call receiver.

## Revendications

1. Procédé d'exploitation d'un système d'appel par radio, selon lequel on peut entrer en liaison avec un central d'appel radio par le réseau téléphonique à partir d'un poste d'abonné au téléphone en composant un nombre indicatif particulier (fig. 4), suivi du numéro d'appel de l'abonné au système d'appel par radio appelé, d'après lequel le central d'appel radio émet un signal d'appel (R, Rv) au recepteur d'appel radio concerné, le signal d'appel (R, Rv) pouvant contenir également un message introduit par l'appelant (un numéro d'appel par exemple), lequel est affiché par voie optique sur un dispositif d'affichage du récepteur d'appel radio, et selon lequel, par la numérotation combinée du chiffre indicatif d'un signal d'appel (R, Rv) et d'un chiffre de code déterminé (06), l'appelant reçoit un signal acoustique (aS) pour signaler qu'une communication vocale avec le récepteur d'appel radio est ensuite mise à disposition, pendant laquelle des informations parlées (S) peuvent être transmises à ce récepteur, caractérisé en ce que le signal d'appel (R, Rv) est émis dans un cycle d'émission (Sz) qui commence par un préambule, pouvant être suivi de plusieurs signaux d'appel (R, Rv),

que, après numérotation du chiffre de code (06), l'émission du signal d'appel (R) correspondant est retardée, jusqu'à ce que tous les signaux d'appel (Rv) bénéficiant de priorité dans un cycle d'émission aient été émis,

que le signal d'appel (R) produit par la numérotation avec chiffre de code (06) est émis immédiatement à la suite des signaux d'appel (R) émis dans le même cycle d'émission (Sz), sans préambule intermédiaire, et

que la mise à disposition de la communication vocale est assurée dans le même cycle d'émission (Sz), à la suite de l'émission du signal d'appel (R) produit par la numérotation avec chiffre de code (06).

2. Procédé selon la revendication 1, caractérisé en ce que l'abonné appelant reçoit seulement la fin du signal acoustique (aS) lorsque tous les signaux d'appel (Rv) bénéficiant de priorité dans un cycle d'émission (Sz) ont été émis.

3. Procédé selon une des revendications précédentes, caractérisé en ce que l'abonné appelant reçoit un signal d'attente (Ws) avant le signal acoustique (aS).

4. Procédé selon une des revendications 1 à 3, caractérisé en ce que le retard de l'émission du signal d'appel (R) produit par la numérotation avec chiffre de code (06) résulte d'une mémorisation temporaire (16) dans le central d'appel radio.

5. Procédé selon une des revendications précédentes, caractérisé en ce que les signaux d'appel (Rv) produits par une numérotation sans chiffre de code (06) bénéficient de priorité.

6. Procédé selon une des revendications 1 à 5, caractérisé en ce que le cycle d'émission (Sz), c'est-à-dire l'intervalle de temps entre un préambule (D) et le préambule (P) suivant, n'est pas inférieur à intervalle de temps minimal.

7. Procédé selon la revendication 6, caractérisé en ce que les intervalles de temps prévus chaque fois pour un cycle d'émission (Sz) ont une durée fixe.

8. Procédé selon une des revendications précédentes, caractérisé en ce que les laps de temps (Zr) prévus chaque fois pour une communication vocale ont la même durée entre eux.

9. Procédé selon une des revendications précédentes, caractérisé en ce que l'abonné appelant reçoit un avertissement acoustique (T) avant la fin du laps de temps (Zr) prévu pour une communication vocale.

10. Procédé selon les revendications 7 et 8, caractérisé en ce

que l'abonné appelant par une numérotation avec un chiffre de code (06) reçoit un signe d'occupation (B) lorsque les signaux d'appel (Rv) prioritaires prévus pour le cycle d'émission (Sz) suivant ne laissent plus assez de temps pour le laps de temps (Zr) prévu pour une communication vocale et

que, jusqu'à une nouvelle numérotation (W), aucun signal d'appel pour cet abonné appelant n'est émis.

11. Procédé selon les revendications 7 et 8, caractérisé en ce que l'émission d'un signal d'appel (R) correspondant à une numérotation avec le chiffre de code (06) est retardée jusqu'à un cycle d'émission (Sz1) ultérieur lorsque les signaux d'appel (Rv) prioritaires prévus pour le cycle d'émission (Sz) suivant ne laissent plus assez de temps pour le laps de temps (Zr) prévu pour une communication vocale.

12. Procédé selon les revendications 7 et 8, caractérisé en ce

que, en cas d'arrivée simultanée, dans le central d'appel radio, de groupes d'impulsions de sélection (W) qui correspondent à des signaux d'appel (Rv) prioritaires et à une numérotation avec le chiffre de code (06), le nombre de signaux d'appel (Rv) prioritaires émis dans le cycle d'émission (Sz) suivant est tel qu'il reste encore du temps pour l'émission, immédiatement après, du signal d'appel (R) correspondant à la numérotation avec le chiffre de code, et pour la communication vocale consécutive et

que les signaux d'appel prioritaires restants (surplus) (Ü) sont émis dans un cycle d'émission (Sz1) ultérieur.

13. Procédé selon une des revendications 1 à 12, caractérisé en ce que, en cas d'arrivée de deux groupes d'impulsions de sélection (W) contenant chacun le chiffre de code (06) dans une période correspondant à un cycle d'émission (Sz), l'abonné appelant auquel correspond le groupe d'impulsions de sélection arrivant en dernier reçoit un signe d'occupation.

14. Procédé selon une des revendications 1 à 12, caractérisé en ce que, en cas d'arrivée de deux groupes d'impulsions de sélection contenant chacun le chiffre de code (06) dans une période qui correspond à un cycle d'émission (Sz), la priorité est donnée au signal d'appel, correspondant à l'un de ces groupes d'impulsions de sélection, qui a été produit par la numérotation supplémentaire d'un code d'appel de groupe.

15. Installation d'appel par radio comprenant un central d'appel radio, avec lequel une liaison peut être établie par un réseau téléphonique, dans lequel sont prévus un transcodeur (C) pour produire des signaux d'appel (R, Rv) et une mémoire d'émission (3) pour la mémorisation temporaire des signaux d'appel (R, Rv) lesquels sont à émettre séquentiellement dans des cycles d'émission (Sz, Sz1), ainsi qu'un émetteur (11) pour les signaux d'appel et pour un préambule (B) produit par un générateur de préambule (9) et devant être placé chaque fois au début d'un cycle d'émission, charactérisé par des moyens pour produire (22) et pour transmettre (ligne 29), éventuellement avec un retard (12, R = 20), un signal acoustique (aS) à un abonné appelant lorsque celui-ci a manifesté le désir de parler par un numérotation, produisant un signal d'appel, en combinaison avec un chiffre de code déterminé (06).

16. Installation selon la revendication 15, caractérisé en ce que le central d'appel radio (fig. 4) contient un décodeur (15) pour le chiffre de code (06), qui, dans chaque cycle d'émission (Sz), agit sur des moyens de commande pour

— retarder (16, 27, 12) l'émission du signal d'appel (R) correspondant,
— détecter (R = 0) le passage du dernier des signaux d'appel (Rv) qui, dans un cycle d'émission (Sz), suivent le préambule et qui ont été émis à la suite d'opérations de numérotation effectuées sans chiffre de code (06).
— pour adjoindre immédiatement (Rü), ce qui est déclenché par cette détection (R = 0), le signal d'appel (R) appartenant au chiffre de code (06) et pour l'émettre à la suite dudit dernier signal d'appel (Rv), et
— pour commuter ensuite (U3) la voie de communication pour signaux d'appel arrivant à l'émetteur (11) sur une voie de communication (24) venant de l'abonné appelant et convenant à une communication vocale en direction d'un récepteur d'appel radio.

## Fig. 1

a) }
b) } rufender Teilnehmer mit Sprechwunsch

c) Funkrufzentrale

W 06 — W 06 — Ws — Ws' — aS — aS' — Zr — P — Rv — R — S — T — P — Sz — Sz1

## Fig. 2

d) }
e) } rufender Teilnehmer mit Sprechwunsch

f) Funkrufzentrale

W 06 — W 06 — Ws — Ws' — B — B' — P — Rv — P — $280 \times Rv$ — Sz — Sz1

## Fig. 3

g) rufender Teilnehmer ohne Sprechwunsch

h) Funkrufzentrale

W — W — H — Rv — Sz — Sz1

Fig. 4